# EUROPEAN PATENT SPECIFICATION

(11) **EP 2 141 785 B1**
(45) Date of publication and mention of the grant of the patent: **28.08.2019**
(21) Application number: 09008478.1
(22) Date of filing: 29.06.2009
(51) Int. Cl.: H02K 23/66, H02K 11/00

(54) **Sensor magnet holder, motor having the holder incorporated therein, and method of manufacturing the motor**
Sensormagnethalter, Motor mit darin eingebautem Halter und Verfahren zur Herstellung des Motors
Support magnétique de capteur, moteur doté du support incorporé dans celui-ci, et procédé de fabrication du moteur

(30) Priority: 04.07.2008 JP 2008175240
(43) Date of publication of application: 06.01.2010
(73) Proprietor: Mabuchi Motor Co., Ltd., Matsudo-shi, Chiba 270-2280 (JP)
(72) Inventor: Kikuchi, Satoshi, Matsudo-shi, Chiba 270-2280 (JP); Akimoto, Takahiro, Matsudo-shi, Chiba 270-2280 (JP)
(74) Representative: Winter, Brandl, Fürniss, Hübner, Röss, Kaiser, Polte - Partnerschaft mbB

(56) References cited:
- EP-A1- 0 601 228
- EP-A1- 1 117 174
- DE-A1- 10 212 507
- JP-U- H0 629 374
- US-A1- 2005 082 926

## Description

### BACKGROUND OF THE INVENTION

### 1. Field of the Invention

The present invention relates to a motor having a holder adapted to mount a sensor magnet for detecting a change in the position of a magnetic pole with rotation of a motor shaft so as to acquire a signal corresponding to a change in the rotational position of a rotor, and to a method of manufacturing the motor.

### 2. Description of the Related Art

In a small-sized motor, a rotation detector for detecting the rotational speed and rotational position of the motor is used in such a manner as to be assembled to a rotary member of the motor, such as a motor shaft. In, for example, a brushless motor, such a rotation detector is used to obtain information about the rotational position of the motor. In the brushless motor, as is well known, a magnet called a sensor magnet whose poles are formed alternately in the circumferential direction is mounted on a rotating shaft, and a magnetic sensing element is provided in the vicinity of the sensor magnet. Since the sensor magnet is magnetized according to the positions of poles of permanent magnets mounted on a rotor, a change in the position of a magnetic pole of the sensor magnet with rotation of a motor shaft, which is detected by the magnetic sensing element detects, corresponds to a change in rotational position of the rotor. A detection signal of the magnetic sensing element is used as information about rotational position of the rotor for drive control.

Also, in a motor equipped with a worm reducer, the rotation detector is used to detect the rotational speed and rotational position of the motor for control thereof (refer to JP 2003-164113 A and JP 2005-348525 A). In the motor equipped with a worm reducer, rotational power of a motor shaft functions, for example, to vertically move a window glass via a worm and a worm wheel and further via a glass-elevating mechanism connected to an output shaft of the reducer. In order to detect the position and velocity of the window glass, a rotation detector is incorporated into the motor equipped with a worm reducer.

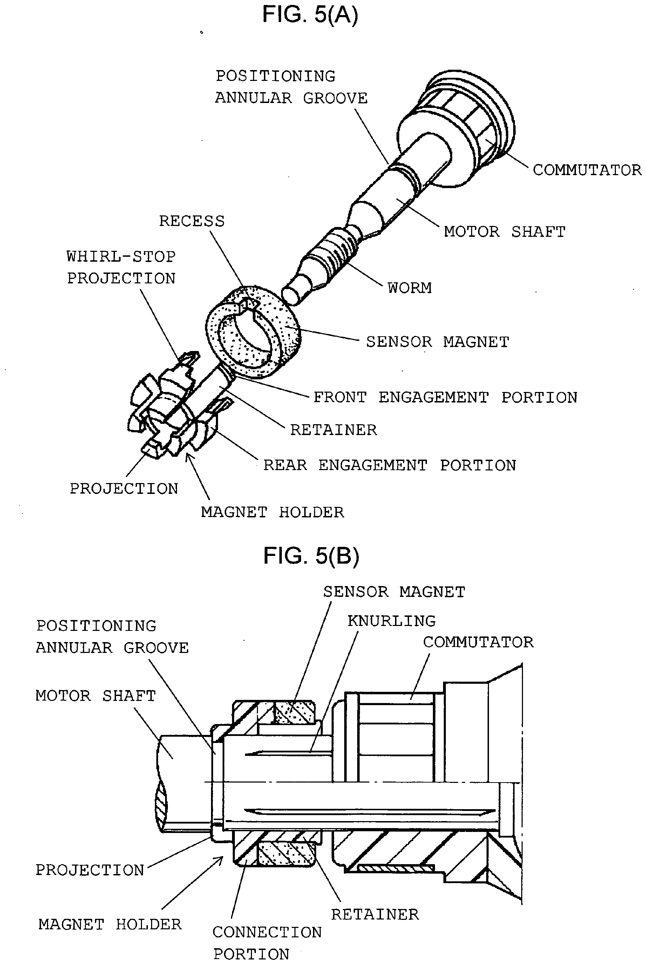

In the above-mentioned rotation detector, the sensor magnet is mounted on a portion of the motor shaft within a motor casing or on a portion of the motor shaft extending outward from the motor casing. FIG. 5(A) and 5(B) are a pair of views illustrating a conventional technique for mounting a sensor magnet on a motor shaft (refer to JPU H7-38967 A), wherein FIG. 5(A) is an exploded perspective view, and FIG. 5(B) is a partially cutaway front view. The sensor magnet, which serves as an object under detection, is mounted on the motor shaft adjacently to a commutator while being held on a magnet holder. A one-piece magnet holder formed of resin has a plurality of retainers arranged at equal circumferential intervals. The retainers are integrated together at their rear end portions by means of a connection portion formed into a circular ring. Each of the retainers has a front engagement portion, which projects radially outward from the outer circumference of a front end portion of the retainer, and a rear engagement portion, which projects radially outward from the outer circumference of a rear end portion of the retainer. The front and rear engagement portions are engaged with the opposite end faces of the sensor magnet fitted to the outer circumferences of the retainers.

The sensor magnet has a recess formed therein, and a whirl-stop projection of the magnet holder is fitted into the recess, whereby the sensor magnet is positioned circumferentially. Also, in order to prevent the sensor magnet from moving away from the commutator, a positioning annular groove is formed on the outer circumferential surface of the motor shaft. Meanwhile, a plurality of projections projecting radially inward are formed on the inner circumference of a rear end portion of the magnet holder in such a manner as to be able to be fitted radially inward into the positioning annular groove. Furthermore, knurlings provided on the outer circumferential surface of the motor shaft for preventing rotation of the commutator and an armature are extended so that the material resin of the retainers compressed between the sensor magnet and the motor shaft is deformed along ridges and grooves of the knurlings, whereby the retainers and the motor shaft are brought into an engaged state.

As mentioned above, the illustrated rotation detector involves complicated shapes for positioning and fixation of the sensor magnet in relation to the magnet holder and for positioning and fixation of the magnet holder in relation to the motor shaft and fails to provide sufficient torque against a circumferential movement of the sensor magnet.

Also, the illustrated rotation detector is designed on the assumption that it is disposed adjacent to the commutator. When the rotation detector is disposed adjacent to a worm gear, there is the risk of worm gear grease oozing toward a Hall sensor board.

EP 0 601 228 A1 discloses an electric motor drive comprising a magnet body held on its rotor shaft. Such a drive is suitable, in particular, as an auxiliary drive in a motor vehicle in which the magnet body is a magnet wheel attached to the rotor shaft and producing a speed-proportional signal in a stator-side Hall probe device. Such drives may be employed, for instance, in speed-controlled window drives or window drives controlled by the direction of rotation. With the electromotive drive disclosed in EP 0 601 228 A1, axially and tangentially fixing the magnet body in position on the rotor shaft is possible without regard to the brittleness of the magnet body. This fixing is accomplished with a holding part. Thus, additional cementing is not required. The holding part can be designed in rugged manner with a view toward a sufficient force fit. The holding part can be further designed to have the magnet body center itself by using a sliding-seat mounting relative to the rotor shaft on the rotor shaft independently of the holding part. Due to the mounting of the holding body axially in front of or behind the magnet body, attaching the magnet body without radially increasing the structural size of the arrangement is possible. Further, such an arrangement is axially compact. DE 102 12 507 A1 relates to a fastening arrangement for attachment of an annular magnet on an armature shaft of an electrical machine. The ring magnet is thereby used to determine the armature shaft speed and/or direction of rotation of the armature shaft. The ring magnet rests against a first end face at one on the armature shaft fixedly arranged part. At a second end of the ring magnet is applied to an on the armature shaft arranged fastener. The fixing element thereby provides a biasing force in the axial direction and in radial direction ready to allow a length compensation of thermally induced changes in length.

### SUMMARY OF THE INVENTION

An object of the present invention is to solve the above-mentioned problems and to provide a motor having a sensor magnet holder which can be sufficiently firmly press-fitted to a motor shaft without need for conventionally required preliminary machining, such as knurling for fixation of a sensor magnet and grooving for formation of a positioning annular groove.

Another object of the present invention is to prevent cracking of the sensor magnet through elimination of need for application of a large force, such as a conventionally required large press fit force, in fitting the sensor magnet to the motor shaft via the sensor magnet holder, and to reliably and fixedly position the sensor magnet with respect to the axial direction and the rotational direction of the motor shaft at a position where the sensor magnet is positioned through fitting.

A further object of the present invention is to prevent oozing of grease of a worm gear toward a Hall sensor board even when the sensor magnet holder is disposed adjacent to the worm gear.

A motor of the present invention comprises a sensor magnet holder for mounting a sensor magnet on a motor shaft in such a manner as to face a magnetic sensing element provided on a stationary section of a motor so as to acquire a signal corresponding to a change in rotational position of the motor shaft. The sensor magnet holder is formed such that a cylindrical portion, a flange portion formed by increasing the diameter of one end part of the cylindrical portion, a magnet rear-end engagement portion formed at the other end part of the cylindrical portion, and a plurality of plate-like snap fit tongues are formed integral with one another. The cylindrical portion including the flange portion has, on its inner diametral side, a press fit portion to be press-fitted to a motor shaft. The plurality of plate-like snap fit tongues extend from an inner diametral part of the cylindrical portion in an axial direction of the motor shaft and have respective magnet front-end engagement portions formed on an outer diametral side of their tip portions. The snap fit tongues are brought into contact with respective flat inner surfaces of the sensor magnet having the flat inner surfaces, by utilizing elasticity of the snap fit tongues. The sensor magnet is retained between the magnet rear-end engagement portion and the magnet front-end engagement portions.

In addition, the magnet rear-end engagement portion has a plurality of bosses formed on its end surface, and, in engagement of the sensor magnet, tips of the bosses are crushed, thereby fixing the sensor magnet with respect to the axial direction of the motor shaft.

The snap fit tongues collectively have an inside diameter greater than that of a press fit portion corresponding to an inner circumferential part of the cylindrical portion so as to form a clearance between the snap fit tongues and an outer circumferential surface of the motor shaft. The snap fit tongues have respective shaft contact portions formed on an inner diametral side of their tip portions.

According to a method of manufacturing the motor of the present invention, the motor having the above-mentioned sensor magnet holder incorporated therein is formed by press-fitting, to the motor shaft, the sensor magnet holder having the sensor magnet engaged therewith.

According to the present invention, in place of fixation of the sensor magnet on the motor shaft by means of stress imposed on the sensor magnet, the press fit portion of the sensor magnet holder used to fix the sensor magnet is press-fitted to the motor shaft, thereby fixing the sensor magnet on the motor shaft. Thus, while the sensor magnet holder can be press-fitted to the motor shaft sufficiently firmly, the sensor magnet is unlikely to crack. The press fit assembly improves resistance to relative movement between the motor shaft and the sensor magnet holder. Also, by means of imparting a square shape to the inner periphery of the sensor magnet, a whirl-stop torque can be improved.

Since the present invention does not involve any machining of the motor shaft, such as knurling and cutting an annular groove for positioning, bending of the motor shaft does not occur, and the sensor magnet can be fixed with respect to the rotational direction and the axial direction at low cost. The sensor magnet and the sensor magnet holder are snap-fitted together such that, after fitting to the motor shaft, the sensor magnet is free from detachment.

Also, according to the present invention, even when the sensor magnet holder is disposed adjacent to a worm gear, oozing of worm gear grease toward a Hall element board can be prevented.

Also, according to the present invention, at least one of the snap fit tongues is brought into contact with at least one flat surface of the sensor magnet formed on its inner circumference, by utilizing elasticity of the snap fit tongues. This snap fit feature eliminates the need for provision of a projection and a recess for axial engagement against relative rotation between the sensor magnet and the sensor magnet holder, thereby improving assembling workability.

### BRIEF DESCRIPTION OF THE DRAWINGS

FIG. 1 is a perspective view showing, partially in section, the overall configuration of a motor equipped with a worm reducer including a rotation detector.
FIG. 2(A) is a perspective view showing the motor of FIG. 1 with a reducer casing and other members removed for better view of the rotation detector, and FIG. 2(B) is a perspective view showing, on an enlarged scale, the rotation detector and its periphery.
FIGS. 3(A)-3(D) are a series of views showing an isolated sensor magnet holder, wherein FIG. 3(A) and FIG. 3(B) are perspective views from different directions, FIG. 3(C) is a sectional, perspective view, and FIG. 3(D) is an enlarged sectional view showing region X of the tip of a snap fit tongue shown in FIG. 3(C).
FIGS. 4(A)-4(C) are a series of views for explaining the mounting of a sensor magnet on a motor shaft via the sensor magnet holder, wherein FIG. 4(A) is a perspective view showing the sensor magnet holder and the sensor magnet in a juxtaposed fashion, FIG. 4(B) is a perspective view showing a mounted state, and FIG. 4(C) is a sectional view of FIG. 4(B).
FIGS. 5(A) and 5(B) are a pair of views exemplarily showing a conventional technique for mounting a sensor magnet on a motor shaft, wherein FIG. 5(A) is an exploded perspective view, and FIG. 5(B) is a partially sectional front view.

### DETAILED DESCRIPTION OF THE PREFERRED EMBODIMENTS

An embodiment of the present invention will be described by way of example. The technique of the present invention for positioning and fixing a sensor magnet on a motor shaft at a predetermined position can be applied to all sorts of small-sized motor whose rotational speed and rotational position must be detected, such as the aforementioned conventional brushless motor and motor equipped with a worm reducer. In the following description, application of the present invention to a motor equipped with a worm reducer will be discussed by way of example.

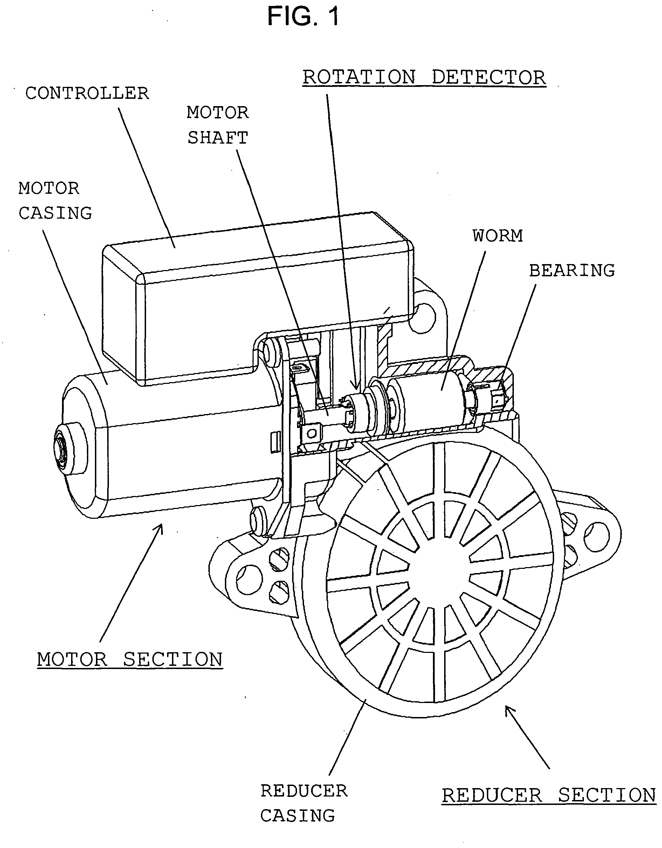

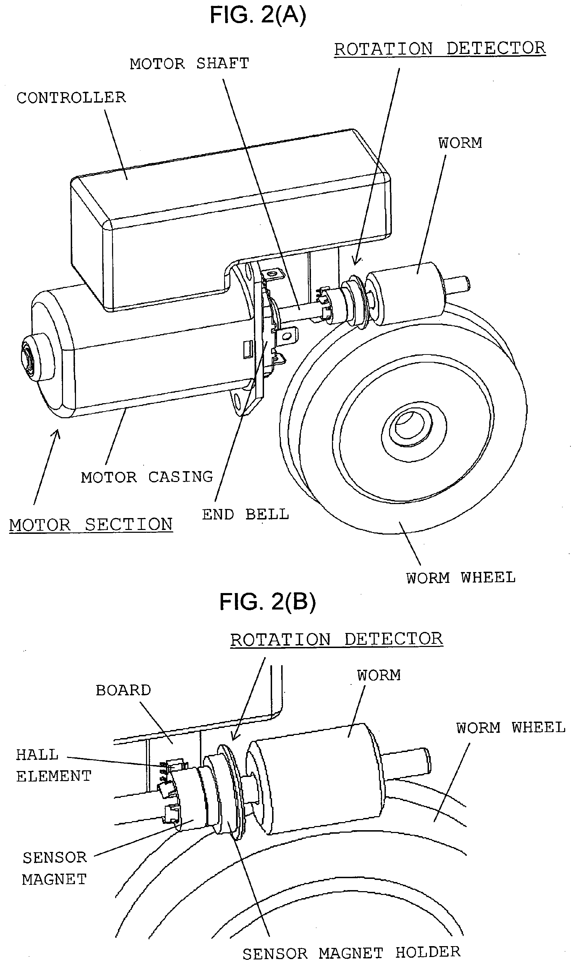

FIG. 1 is a perspective view showing, partially in section, the overall configuration of a motor equipped with a worm reducer including a rotation detector. FIG. 2(A) is a perspective view showing the motor of FIG. 1 with a reducer casing and other members removed for better view of the rotation detector, and FIG. 2(B) is a perspective view showing, on an enlarged scale, the rotation detector and its periphery. To a motor section are connected, by means of screws or the like, a reducer section and a controller for controlling the motor section and the reducer. The motor is an ordinary brush DC motor. The motor has a motor casing which is formed from a metal material into a closed-bottomed tubular shape and has magnets attached to its inner circumferential surface, and an end bell which is fitted to the motor casing in such a manner as to close an opening portion of the motor casing. A projecting end of the motor shaft extending outward from the end bell of the motor section is supported by a bearing provided in the reducer casing.

The reducer section includes a worm coupled with an extending portion of the motor shaft, a worm wheel meshed with the worm, and an output shaft (not shown) extending outward from the center of the worm wheel. The output shaft is connected to, for example, an automotive power window device.

The rotation detector is composed of a sensor magnet provided on a rotary section of the motor and a magnetic sensing element (Hall element) provided on a stationary section of the motor. The illustrated Hall element is mounted on a board fixed on a controller housing, in such a manner as to face the rotating sensor magnet. By means of provision of conductive lines for supplying current to the Hall element and leading signals out from the Hall element, the rotation detector functions as follows: the Hall element detects a change in magnetic flux from magnetic poles with relative movement between the sensor magnet and the Hall element corresponding to rotation of the motor and generates a pulse signal indicative of the change. Thus, the rotational speed and rotational position of the motor can be detected and controlled.

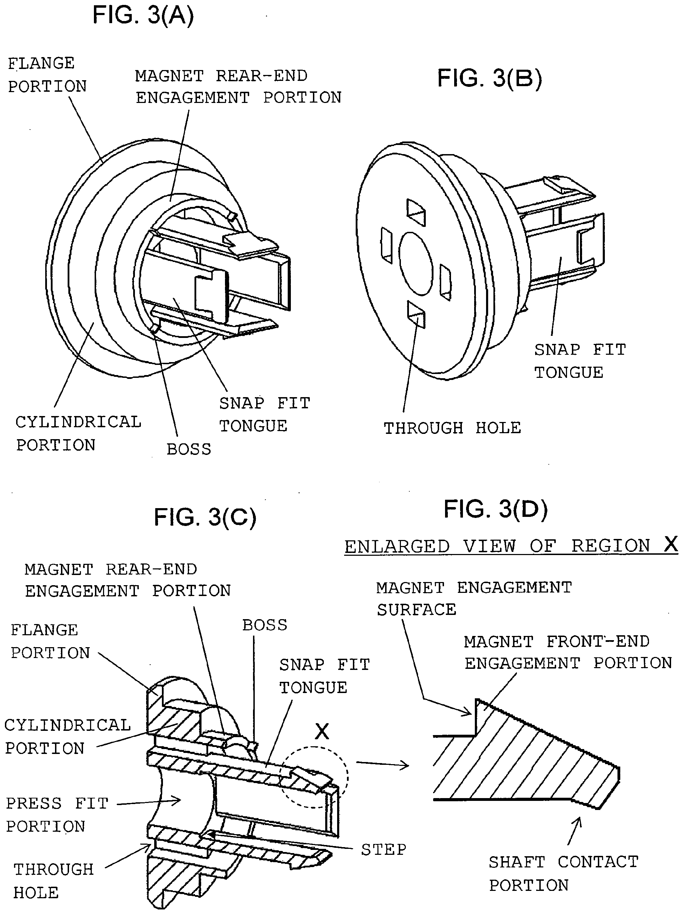

FIGS. 3(A)-3(D) are a series of views showing an isolated sensor magnet holder, wherein FIG. 3(A) and FIG. 3(B) are perspective views from different directions, FIG. 3(C) is a sectional, perspective view, and FIG. 3(D) is an enlarged sectional view showing region X of the tip of a snap fit shown in FIG. 3(C). The illustrated sensor magnet holder is formed from a resin material, such as glass-containing nylon, and includes the following integrally formed portions: a cylindrical portion, a flange portion formed by increasing the diameter of one end part of the cylindrical portion, a circular magnet rear-end engagement portion formed at the other end part of the cylindrical portion, and four plate-like snap fit tongues. The flange portion formed by increasing the diameter of one end part of the cylindrical portion is located at an end portion of the sensor magnet holder and prevents oozing of worm gear grease toward the Hall element board. An inner diametral part of the cylindrical portion serves as a press fit portion to be press-fitted to the motor shaft.

The four plate-like snap fit tongues extend from an inner diametral part of the cylindrical portion in the axial direction of the motor shaft. Each of the snap fit tongues has a magnet front-end engagement portion formed on an outer diametral side of its tip and a shaft contact portion formed on an inner diametral side of the tip; the magnet front-end engagement portion includes a magnet engagement surface extending in the vertical direction and a surface sloping down toward the tip of the snap fit tongue from the magnet front-end engagement portion; and the shaft contact portion projects toward the motor shaft so as to come into contact with the motor shaft. In order to form a clearance between the inner peripheries of the snap fit tongues and the motor shaft, the snap fit tongues are formed integral with the cylindrical portion in such a manner as to form steps between the cylindrical portion and the inner peripheries of the snap fit tongues. In other words, the inside diameter which the snap fit tongues collectively form is greater than that of the press fit portion, which corresponds to an inner diametral part of the cylindrical portion including the flange portion. Thus, only the inner diametral part of the cylindrical portion and the shaft contact portions are press-fitted to the outer circumference of the motor shaft. The circular (cylindrical) magnet rear-end engagement portion located on the end surface of the cylindrical portion has a plurality of bosses formed on its end surface. As will be described later, when the sensor magnet is retained between the magnet rear-end engagement portion and the magnet front-end engagement portions of the snap fit tongues, the tips of the bosses are crushed, thereby reliably fixing the sensor magnet with respect to the axial direction of the motor shaft. Four through holes shown in FIGS. 3(B) and 3(C) are unnecessary in terms of functions of the sensor magnet holder. However, the through holes are required for allowing die pins to extend therethrough in formation of the sensor magnet holder. The through holes are closed with the disposed sensor magnet.

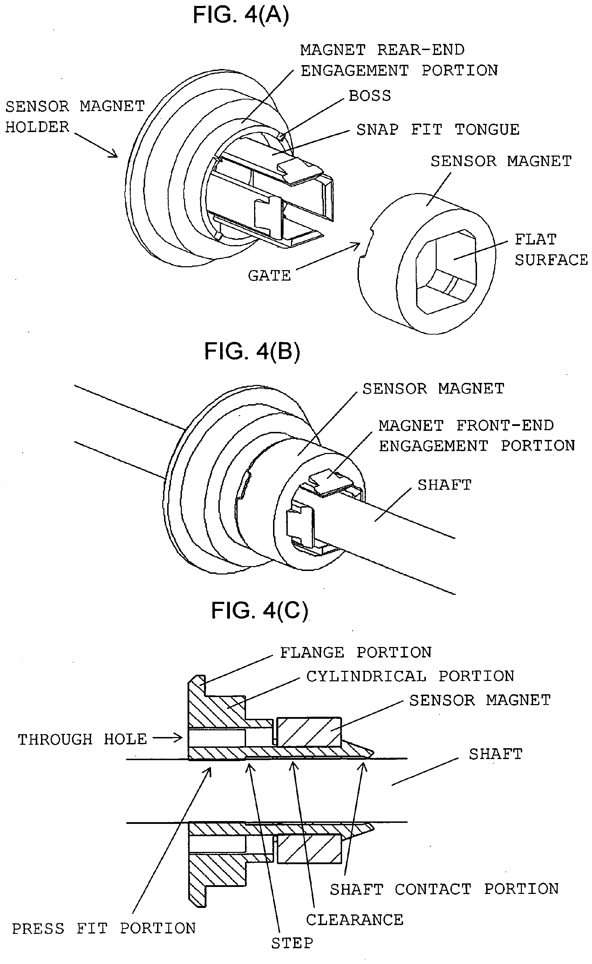

FIGS. 4(A)-4(C) are a series of views for explaining the mounting of the sensor magnet on the motor shaft via the sensor magnet holder, wherein FIG. 4(A) is a perspective view showing the sensor magnet holder and the sensor magnet in a juxtaposed fashion, FIG. 4(B) is a perspective view showing a mounted state, and FIG. 4(C) is a sectional view of FIG. 4(B). The sensor magnet has a predetermined width in the axial direction, an outer circumferential surface, and a substantially square inner peripheral surface having four flat surfaces. As illustrated, corner portions of the substantially square inner peripheral surface may be rounded; however, surfaces corresponding to four sides of the square are rendered flat for allowing contact with the respective plate-like snap fit tongues. The sensor magnet is, for example, a ferritic resin magnet in which magnetic poles (e.g., 4 poles) are alternately formed in the circumferential direction. A gate appearing in FIG. 4(A) is unnecessary in terms of functions of the sensor magnet. However, since the sensor magnet is formed from, for example, a plastic compound material, the gate is the trace of injection of the material and is inevitably formed at an inlet of the material.

In assembly, first, the sensor magnet is assembled onto the sensor magnet holder. At this time, since the snap fit tongues can be deflected radially inward by virtue of their elasticity, the sensor magnet can be readily disposed such that the four snap fit tongues come into contact with the four respective flat surfaces of the sensor magnet. Since each of the magnet front-end engagement portions includes the magnet engagement surface extending in the vertical direction and the surface sloping down toward the tip of the snap fit tongue from the magnet engagement surface, the sensor magnet can be readily fitted to the sensor magnet holder. Once the sensor magnet is fitted to the sensor magnet holder, the sensor magnet is not readily detached from the fitted position by virtue of the magnet engagement surfaces extending in the vertical direction. Through utilization of the elasticity of the snap fit tongues, the sensor magnet can be readily disposed along the axial direction between the magnet rear-end engagement portion and the magnet front-end engagement portions (i.e., the sensor magnet can be snap-fitted). Furthermore, by means of crushing the bosses located on a magnet contact surface, the sensor magnet can be reliably fixed without involvement of any slack. Since the four snap fit tongues come into contact with the four respective flat surfaces of the sensor magnet, the rotation of the sensor magnet in relation to the sensor magnet holder can be reliably prevented.

Next, the sensor magnet holder assembled with the sensor magnet is press-fitted onto the motor shaft. At this time, the press-fitting work involves only the press fit portion corresponding to an inner diametral part of the cylindrical portion including the flange portion, and the shaft contact portions located at the tips of the snap fit tongues. The snap fit tongues excluding the shaft contact portions are formed integral with the cylindrical portion in such a manner as to form steps in the radial direction between the cylindrical portion and the snap fit tongues, so as to form a clearance between the snap fit tongues and the outer circumferential surface of the motor shaft. Thus, there can be prevented cracking of the sensor magnet which could otherwise result from stress received from the motor shaft when the sensor magnet holder is press-fitted to the motor shaft. In other words, the sensor magnet holder can be tightly press-fitted to the motor shaft, thereby eliminating the need for machining of the motor shaft in order to restrain movement of the sensor magnet holder in the axial direction of the motor shaft.

After the sensor magnet holder is press-fitted onto the motor shaft at a predetermined position which is determined by use of a jig, the snap fit tongues cannot be deflected radially inward; therefore, the sensor magnet is reliably held at a disposed position without need to apply a strong force to the sensor magnet.

## Claims

1. A motor into which is incorporated a sensor magnet holder for mounting a sensor magnet on a motor shaft in such a manner as to face a magnetic sensing element provided on a stationary section of the motor so as to acquire a signal corresponding to a change in rotational position of the motor shaft, wherein:
the sensor magnet holder has a press fit portion, which is an inner circumferential part of a cylindrical portion, to be press-fitted to the motor shaft, a magnet rear-end engagement portion, and a plurality of plate-like snap fit tongues formed integral with one another;
the plurality of plate-like snap fit tongues extend from an inner diametral part of the cylindrical portion in an axial direction of the motor shaft and have respective magnet front-end engagement portions formed on an outer diametral side of their tip portions; and
at least one of the snap fit tongues is brought into contact with at least one flat surface of the sensor magnet formed on its inner circumference, by utilizing elasticity of the snap fit tongues, and the sensor magnet is retained between the magnet rear-end engagement portion and the magnet front-end engagement portions; **characterized in that**
the magnet rear-end engagement portion has a plurality of bosses formed on its end surface, and, in engagement of the sensor magnet, tips of the bosses are crushed, thereby fixing the sensor magnet with respect to the axial direction of the motor shaft.

2. The motor according to claim 1, wherein the snap fit tongues collectively have an inside diameter greater than that of the press fit portion so as to form a clearance between the snap fit tongues and an outer circumferential surface of the motor shaft, and the snap fit tongues have respective shaft contact portions formed on an inner diametral side of their tip portions.

3. The motor according to claim 1, wherein the press fit portion has a flange portion formed by increasing a diameter of its one end part.

4. A method of manufacturing a motor into which is incorporated a sensor magnet holder for mounting a sensor magnet on a motor shaft in such a manner as to face a magnetic sensing element provided on a stationary section of the motor so as to acquire a signal corresponding to a change in rotational position of the motor shaft, the method comprising the steps of:
forming the sensor magnet holder in such a manner that a press fit portion, which is an inner circumferential part of a cylindrical portion, to be press-fitted to the motor shaft, a magnet rear-end engagement portion, and a plurality of plate-like snap fit tongues are formed integral with one another, the plurality of plate-like snap fit tongues extending from an inner diametral part of the cylindrical portion in an axial direction of the motor shaft and having respective magnet front-end engagement portions formed on an outer diametral side of their tip portions, wherein the magnet rear-end engagement portion has a plurality of bosses formed on its end surface;
bringing at least one of the snap fit tongues into contact with at least one flat surface of the sensor magnet formed on its inner circumference, by utilizing elasticity of the snap fit tongues, and retaining the sensor magnet between the magnet rear-end engagement portion and the magnet front-end engagement portions, wherein in engagement of the sensor magnet, tips of the bosses of the magnet rear-end engagement portion are crushed, thereby fixing the sensor magnet with respect to the axial direction of the motor shaft; and
press-fitting, to the motor shaft, the sensor magnet holder having the sensor magnet retained thereon.

## Patentansprüche

1. Motor, in den ein Sensormagnethalter eingebaut ist, um einen Sensormagneten auf einer Motorwelle so zu montieren, dass er einem an einem stationären Abschnitt des Motors vorgesehenen magnetischen Erfassungselement gegenüberliegt, um ein Signal zu erfassen, das eine Änderung einer Drehstellung der Motorwelle wiedergibt, wobei:
der Sensormagnethalter einen auf die Motorwelle pressbaren Presspassungsabschnitt aufweist, der ein Innenumfangsteil eines zylindrischen Abschnitts ist, einen Eingriffsabschnitt auf der Magnetrückseite und zahlreiche plattenartige Schnappmontagezungen, die miteinander einstückig ausgebildet sind;
die zahlreichen plattenartigen Schnappmontagezungen sich von einem diametral inneren Teil des zylindrischen Abschnitts in einer Axialrichtung der Motorwelle erstrecken und jeweilige Eingriffsabschnitte am vorderen Ende des Magneten aufweisen, die an einer diametral äußeren Seite ihrer Spitzenabschnitte ausgebildet sind; und
mindestens eine der Schnappmontagezungen unter Nutzung der Elastizität der Schnappmontagezungen mit mindestens einer ebenen Fläche des Sensormagneten in Kontakt gebracht ist, die an seinem Innenumfang ausgebildet ist, und der Sensormagnet zwischen dem Eingriffsabschnitt auf der Magnetrückseite und den Eingriffsabschnitten am vorderen Ende des Magneten gehalten wird; **dadurch gekennzeichnet, dass**
der Eingriffsabschnitt auf der Magnetrückseite zahlreiche Vorsprünge aufweist, die auf seiner Endfläche gebildet sind, und beim Eingriff des Sensormagneten die Spitzen der Vorsprünge zusammengedrückt werden, wodurch der Sensormagnet relativ zur Axialrichtung der Motorwelle fixiert ist.

2. Motor nach Anspruch 1, wobei alle Schnappmontagezungen einen Innendurchmesser bilden, der größer ist als der des Einpressabschnitts, um einen Zwischenraum zwischen den Schnappmontagezungen und einer Außenumfangsfläche der Motorwelle zu bilden, und die Schnappmontagezungen jeweilige Wellenkontaktabschnitte aufweisen, die diametral an einer Innenseite ihrer Spitzenabschnitte ausgebildet sind.

3. Motor nach Anspruch 1, wobei der Presspassungsabschnitt einen Flanschabschnitt aufweist, der durch Vergrößern eines Durchmessers seines einen Endteils ausgebildet ist.

4. Verfahren zur Herstellung eines Motors, in den ein Sensormagnethalter eingebaut ist, um einen Sensormagneten auf einer Motorwelle so zu montieren, dass er einem an einem stationären Abschnitt des Motors vorgesehenen magnetischen Erfassungselement gegenüberliegt, um ein Signal zu erfassen, das eine Änderung der Drehposition der Motorwelle wiedergibt, wobei das Verfahren die folgenden Schritte umfasst:
Ausbilden des Sensormagnethalters derart, dass ein Presspassungsabschnitt, der ein Innenumfangsteil eines zylindrischen Abschnitts ist, der auf die Motorwelle pressbar ist, ein Eingriffsabschnitt auf der Magnetrückseite und zahlreiche plattenartige Schnappmontagezungen miteinander einstückig ausgebildet sind, wobei die zahlreichen plattenartigen Schnappmontagezungen sich von einem diametral inneren Teil des zylindrischen Abschnitts in einer axialen Richtung der Motorwelle erstrecken und jeweilige Eingriffsabschnitte am vorderen Ende des Magneten aufweisen, die an einer diametral äußeren Seite ihrer Spitzenabschnitte ausgebildet sind, wobei der Eingriffsabschnitt auf der Magnetrückseite zahlreiche Vorsprünge aufweist, die an seiner Endfläche ausgebildet sind;
In-Kontakt-bringen von mindestens einer der Schnappmontagezungen mit mindestens einer am Innenumfang des Sensormagneten ausgebildeten ebenen Fläche desselben unter Nutzung der Elastizität der Schnappmontagezungen, und Halten des Sensormagneten zwischen dem Eingriffsabschnitt auf der Magnetrückseite und den Eingriffsabschnitten auf der Magnetvorderseite, wobei beim Eingriff des Sensormagneten die Spitzen der Vorsprünge des Eingriffsabschnitts des hinteren Magnetendes zusammengedrückt werden, wodurch der Sensormagnet in Bezug auf die axiale Richtung der Motorwelle fixiert ist; und
Einpressen des Sensormagnethalters mit dem daran gehaltenen Sensormagneten auf die Motorwelle.

## Revendications

1. Moteur dans lequel est incorporé un support d'aimant de capteur pour monter un aimant de capteur sur un arbre de moteur de façon à faire face à un élément de détection magnétique placé sur une section fixe du moteur de façon à acquérir un signal correspondant à un changement de position de rotation de l'arbre de moteur, dans lequel
le support d'aimant de capteur comporte une partie montée à la presse, qui est une partie circonférentielle intérieure d'une partie cylindrique , destinée à être montée à la presse sur l'arbre de moteur, une partie de prise d'extrémité arrière d'aimant, et une pluralité de languettes de montage par emboitement en plaque formée d'un seul bloc ensemble ;
la pluralité de languettes de montage par emboitement en plaque s'étendent depuis une partie diamétrale intérieure de la partie cylindrique dans une direction axiale de l'arbre de moteur et ont des parties de prise côté avant d'aimant respectives formées sur un côté diamétral extérieur de leurs parties de pointe ; et
au moins une des languettes de montage par emboitement est amenée en contact avec au moins une surface plate de l'aimant de capteur formée sur sa circonférence intérieure, en utilisant l'élasticité des languettes de montage par emboîtement, et l'aimant de capteur est retenu entre la partie de prise d'extrémité arrière d'aimant et les parties de prise d'extrémité avant d'aimant ; **caractérisé en ce que**
la partie de prise d'extrémité arrière d'aimant comporte une pluralité de bossages formés sur sa surface d'extrémité, et en prise de l'aimant de capteur, des pointes des bossages sont écrasées, fixant ainsi l'aimant de capteur par rapport à la direction axiale de l'arbre de moteur.

2. Moteur selon la revendication 1, dans lequel les languettes de montage par emboitement ont collectivement un diamètre intérieur supérieur à celui de la partie montée à la presse de façon à former un espace entre les languettes de montage par emboitement et une surface circonférentielle extérieure de l'arbre de moteur, et les languettes de montage par emboitement ont des parties de contact d'arbre respectives formées sur un côté diamétral intérieur de leurs parties de pointe.

3. Moteur selon la revendication 1, dans lequel la partie montée à la presse comporte une partie de rebord formée en augmentant un diamètre de sa une partie d'extrémité.

4. Procédé de fabrication d'un moteur dans lequel est incorporé un support d'aimant de capteur pour monter un aimant de capteur sur un arbre de moteur de façon à faire face à un élément de détection magnétique placé sur une section fixe du moteur de façon à acquérir un signal correspondant à un changement de position de rotation de l'arbre de moteur,
le procédé comprenant les étapes de :
former le support d'aimant de capteur de telle manière qu'une partie montée à la presse, qui est une partie circonférentielle intérieure d'une partie cylindrique , destinée à être montée à la presse sur l'arbre de moteur, une partie de prise d'extrémité arrière d'aimant, et une pluralité de languettes de montage par emboitement en plaque sont formées d'un seul bloc ensemble, la pluralité de languettes de montage par emboitement en plaque s'étendant depuis une partie diamétrale intérieure de la partie cylindrique dans une direction axiale de l'arbre de moteur et ayant des parties de prise côté avant d'aimant respectives formées sur un côté diamétral extérieur de leurs parties de pointe, dans lequel la partie de prise d'extrémité arrière d'aimant comporte une pluralité de bossages formés sur sa surface d'extrémité ;
amener au moins une des languettes de montage par emboitement en contact avec au moins une surface plate de l'aimant de capteur formée sur sa circonférence intérieure, en utilisant l'élasticité des languettes de montage par emboîtement, et retenir l'aimant de capteur entre la partie de prise d'extrémité arrière d'aimant et les parties de prise d'extrémité avant d'aimant, dans lequel en prise de l'aimant de capteur, des pointes des bossages de la partie de prise d'extrémité arrière d'aimant sont écrasées, fixant ainsi l'aimant de capteur par rapport à la direction axiale de l'arbre de moteur ; et
monter à la presse, sur l'arbre de moteur, le support d'aimant de capteur ayant l'aimant de capteur retenu dessus.
